# EUROPÄISCHE PATENTSCHRIFT

(11) **EP 3 703 974 B1**
(45) Veröffentlichungstag und Bekanntmachung des Hinweises auf die Patenterteilung: **08.09.2021**
(21) Anmeldenummer: 19702830.1
(22) Anmeldetag: 23.01.2019
(51) Int. Cl.: B60N 3/00

(54) **TISCHANORDNUNG FÜR DEN INNENRAUM EINES FAHRZEUGS**
TABLE ARRANGEMENT FOR THE INTERIOR OF A VEHICLE
AGENCEMENT DE TABLE POUR L'HABITACLE D'UN VÉHICULE

(30) Priorität: 02.03.2018 DE 102018203170
(43) Veröffentlichungstag der Anmeldung: 09.09.2020
(73) Patentinhaber: Audi AG, 85045 Ingolstadt (DE)
(72) Erfinder: ENNING, Norbert, 85095 Denkendorf (DE)
(86) Internationale Anmeldenummer: PCT/EP2019/051646
(87) Internationale Veröffentlichungsnummer: WO 2019/166159

(56) Entgegenhaltungen:
- DE-A1-102014 224 560
- DE-A1-102015 226 812

## Beschreibung

Die Erfindung betrifft eine Tischanordnung für den Innenraum eines Fahrzeugs. Die Erfindung betrifft ferner ein Fahrzeug mit einer erfindungsgemäßen Tischanordnung

Mit zunehmendem teilautonomen Fahren bzw. mit zunehmendem assistierten Fahren eines Fahrzeuges wird ein Fahrer vermehrt Zeiten haben, in denen er nur wenige oder keine Fahraufgaben auszuführen hat und daher sich Nebentätigkeiten widmen kann, für die teilweise das Vorhandensein eines Tisches erforderlich ist. Außerdem wird durch die reduzierte Fahraufgabe die Kommunikation mit dem Beifahrer und den Fond-Passagieren steigen, so dass das Bedürfnis nach einem Tisch im Bereich des Fahrers zunehmen wird. Daher ist es wünschenswert, in einem Fahrzeug einen zentralen Tisch als verbindendes Element zur Förderung der Kommunikation und als gemeinsame Ablage zu haben.

Eine Tischanordnung ist aus der DE 10 2006 044 411 A1 bekannt. Diese Tischanordnung für eine Fahrzeugkabine eines Nutzfahrzeugs umfasst ein mittels eines Hubscherensystems hochschwenkbares Tischelement, welches über dieses Hubscherensystem mit einer Konsole verbunden ist. Das Tischelement ist als oberseitig offener Aufbewahrungsbehälter ausgebildet, an welcher an einer Stirnseite eine erste und zweite Tischplatte schwenkbar angelenkt sind und kongruent aufeinanderliegend den Aufbewahrungsbehälter deckelartig abdecken. Zur Realisierung einer Tischfunktion wird die oben liegende erste Tischplatte scharnierartig in eine Gebrauchsposition aufgeklappt und bildet zusammen mit der zweiten Tischplatte, die weiterhin den Aufbewahrungsbehälter abdeckt, eine gemeinsame Tischfläche. Um einen Zugang zu dem Aufbewahrungsbehälter zu ermöglichen, wird die zweite Tischplatte kongruent auf die in der Gebrauchsposition sich befindenden ersten Tischplatte verschwenkt und abgelegt. Anschließend können beide Tischplatten zusammen in die den Aufbewahrungsbehälter verschließende Position zurück verschwenkt werden. Bei dieser bekannten Tischanordnung ist die Tischplatte zweiteilig ausgebildet, so dass die derart gebildeten beiden Tischplatten zur Bildung einer größeren Tischfläche aufklappbar sind.

Aus der DE 10 2014 224 560 A1 ist eine in einem Fahrzeuginnenraum verschiebbare Konsole bekannt, welche einen ausziehbaren oder ausklappbaren Tisch aufweist, wobei der Tisch auch ein Display aufweisen kann.
Bei einer Klapptischanordnung gemäß der DE 100 26 561 A1 ist neben einem Sitzkissen eines Fondsitzes eine Kassette angeordnet, in welche ein Aufnahmegehäuse für einen Klapptisch mit einer 2-teiligen Tischplatte versenkt werden kann. Jede der Tischplattenteile ist an die Breite des Aufnahmegehäuses angepasst, wobei die Tischplattenteile über Scharniere verbunden sind. Um den Klapptisch in seine Funktionsstellung zu verbringen, wird das Aufnahmegehäuse um eine sich etwa auf der Höhe einer vorderen Sitzkante des Fondsitzes befindende Schwenkachse nach oben verschwenkt. Anschließend wird aus dem Aufnahmegehäuse der Klapptisch nach oben herausgezogen und dann seitlich in seine Funktionsstellung geklappt, in welcher er sich vor der Sitzlehne des Fondsitzes befindet.

Die DE 10 2015 226 812 A1 beschreibt eine Rücksitzkonsole eines Fahrzeugs mit Armstütze zum schwenkbaren Verschließen eines Konsolenraumes, in welchem ein Klapptisch installiert ist, welcher bei aufgeklappter Armstütze aus dem Konsolenraum herausgezogen werden kann. Die Position des Klapptisches ist jeweils an die Position eines links oder rechts der Rücksitzkonsole sitzenden Fahrzeuginsassen anpassbar. Der Klapptisch besteht aus zwei gelenkig miteinander verbundenen Tischplatten, welche kongruent aufeinander liegen, wenn sie nicht in Verwendung sind, und zur Verwendung aufgeklappt werden und dadurch eine ebene Tischfläche bilden. Der Klapptisch ist in der Rücksitzkonsole installiert und wird von zwei Dreharmen gehalten, um mit einer Abwärtsdrehung dieser beiden Dreharme den Klapptisch in den Konsolenraum abzusenken oder mit der Aufwärtsdrehung dieser beiden Trägerarme den Klapptisch aus dem Konsolenraum herauszuziehen.

Weiterhin ist aus der DE 10 2013 015 854 A1 eine Mittelarmlehne für einen Fahrzeugsitz mit einer Tischplattenfunktion bekannt. Diese Mittelarmlehne weist eine obere Armauflageschicht und eine untere Armauflageschicht auf, wobei die obere Armauflageschicht mit ihrer Unterseite auf der Oberseite der unteren Armauflageschicht aufliegend angeordnet ist und zur Realisierung einer Tischplattenfunktion gegenüber der unteren Armauflageschicht aus einer Ablageposition verschwenkbar ist. Die obere Armauflageschicht ist mittels einer Schwenkvorrichtung gegenüber der unteren Armauflageschicht um 180° in eine Gebrauchsposition derart verschwenkbar ausgebildet, dass die Unterseite der oberen Armauflageschicht mit der Oberseite der unteren Auflageschicht eine gemeinsame ebene Tischplatte bilden.

Schließlich ist aus der DE 10 2014 002 827 A1 eine Tischanordnung bekannt, welche aus einer Verstauposition in einer Mittelkonsole eines Fahrzeugs in eine Gebrauchsposition verstellbar ist, wobei diese Mittelkonsole von einer schwenkbar an derselben angelenkten Mittelarmlehne verschließbar ist.

Ausgehend von diesem Stand der Technik ist es Aufgabe der Erfindung, eine Tischanordnung für den Innenraum eines Fahrzeugs mit vergrößertem Funktionsumfang anzugeben.

Eines solche Tischanordnung für den Innenraum eines Fahrzeugs umfasst folgende Komponenten:
- eine Tischplattenanordnung mit einer ersten Tischplatte und einer zur ersten Tischplatte Konkurrenten zweiten Tischplatte, wobei die erste und zweite Tischplatte derart schwenkbar verbunden sind, dass die erste Tischplatte zwischen einer ersten Position, in welcher dieselbe Konkurrent auf der zweiten Tischplatte liegend angeordnet ist, und einer zweiten Position, in welche die erste Tischplatte gemeinsam der zweiten Tischplatte eine ebene Tischfläche bilden, schwenkbar ist,
- ein jeweils auf der Oberseite und der Unterseite der ersten Tischplatte ausgebildeten Display
- eine auf der Oberseite der ersten Tischplatte angeordneten Armauflage für einen Fahrer des Fahrzeugs,
- ein auf der Oberseite der zweiten Tischplatte ausgebildeten Display, und
- eine Tragarmvorrichtung, mit welcher die Tischplattenanordnung mit einer Karosserie des Fahrzeugs verschwenkbar verbunden ist.

Die Tischplattenanordnung einer solchen Tischanordnung dient nicht nur der Ablage von Gegenständen, sondern auch als Armstütze für den Fahrer des Fahrzeugs und wird des Weiteren auch als Display genutzt. Ein solches Display kann als Desktopoberfläche, zur Darstellung eines Handybildschirms oder zur frei konfigurierbaren Darstellung von fahrzeugspezifischen Informationen genutzt werden. Schließlich sichert die Verschwenkbarkeit der Tischplattenanordnung eine an die Nutzung durch einen Fahrzeuginsassen angepasste Position der ersten Tischplatte der Tischplattenanordnung. Insbesondere bei einer Nutzung des Displays lässt sich die erste Tischplatte in eine hierfür passende Position Verschwenken.

Mit einer zweiten Tischplatte kann die Tischfläche der ersten Tischplatte verdoppelt werden.

Bei der Erfindung ist nicht nur die Oberseite der ersten Tischplatte mit einem Display, sondern auch deren Unterseite mit einem Display ausgebildet. Zusätzlich weist auch die Oberseite der zweiten Tischplatte ein Display auf, so dass im aufgeklappten Zustand der zweiten Tischplatte zusammen mit der ersten Tischplatte ein großes Display entsteht. Eine solche aus den beiden Tischplatten gebildete Tischfläche mit einer Displayoberfläche kann als PC- oder Tablet-Bildschirm, zum Spielen von PC-Spielen, wie bspw. Brettspielen oder für in verschiedenen Fenstern frei positionierbare, verschiebbare oder drehbare Besprechungsunterlagen genutzt werden.

Die Nutzung der Tischplattenanordnung als Armstütze für den Fahrer setzt natürlich voraus, dass die Tischanordnung benachbart zum Fahrersitz, also im Bereich der Mittelkonsole des Fahrzeugs mit der Fahrzeugkarosserie schwenkbar verbunden ist.

Eine vorteilhafte Weiterbildung der Erfindung sieht vor, dass
die erste und zweite Tischplatte randseitig mit einem Scharnier schwenkbar verbunden sind.

Besonders vorteilhaft ist es nach einer weiteren Ausgestaltung der Erfindung, wenn auch die zweite Tischplatte auf der Unterseite mit einem Display ausgebildet ist. Damit kann der mit aufgeklappter zweiter Tischplatte entstehende Tisch in eine senkrechte Position verschwenkt werden, so dass dessen Unterseite als Fernseh- oder Bildschirm eingesetzt werden kann.

Nach einer weiteren bevorzugten Weiterbildung der Erfindung ist vorgesehen, dass
- die Tragarmvorrichtung einen Tragarm umfasst, welcher mit einem Ende mittels eines ersten Drehgelenkes schwenkbar mit der Karosserie des Fahrzeugs verbunden ist, und
- die Tischplattenanordnung mit einem anderen Ende des Tragarms mittels eines zweiten Drehgelenkes schwenkbar verbunden ist.

Vorzugsweise ist mittels des zweiten Drehgelenks die zweite Tischplatte schwenkbar mit dem Tragarm verbunden.

Damit kann die Tischplattenanordnung der erfindungsgemäßen Tischanordnung in einer waagrechten Lage in mehrere Fahrzeugrichtungen verschwenkt werden.

Zur Einrichtung einer Grundposition der Tischanordnung ist weiterbildungsgemäß vorgesehen, dass
- ein erster keilförmiger Anschlag am mit der Karosserie verbundenen Ende des Tragarms vorgesehen ist, welcher ausgebildet ist den Tragarm in einer gegenüber dem Karosserieboden geneigten Richtung abzustützen, und
- ein zweiter Anschlag an dem Tragarm angeordnet ist, welcher ausgebildet ist die Tischplattenanordnung in einer waagerechten Lage abzustützen.

Diese Grundposition der Tischanordnung ist so eingerichtet, dass ein Fahrer seinen Arm bequem auf der auf der Oberseite der ersten Tischplatte angeordneten Armauflage ablegen kann. Aus dieser Grundposition kann die Tischplattenanordnung in Abhängigkeit der Nutzung in unterschiedlichste Positionen verschwenkt werden.

Nach einer weiteren vorteilhaften Ausgestaltung der Erfindung ist das erste Drehgelenk und/oder das zweite Drehgelenk als Rastgelenk ausgebildet. In Abhängigkeit der Rastung eines solchen Rastgelenkes kann die Tischplattenanordnung und der Tragarm in unterschiedlichen Positionen manuell verstellt und dort verrastet werden.

Eine besonders bevorzugte Weiterbildung der Erfindung sieht vor, dass das erste Drehgelenk und/oder das zweite Drehgelenk mittels eines selbsthemmenden motorischen Schwenkantriebs verstellbar ist. Damit eröffnet sich die Möglichkeit, dass die Tischanordnung aus der Grundposition mittels der Schwenkantriebe der beiden Drehgelenke automatisch in vorbestimmte Positionen verstellbar ist, mit der Maßgabe, dass die Tischplattenanordnung immer in waagerechter Richtung gegenüber dem Karosserieboden ausgerichtet wird. Es bietet sich an, solche Schwenkantriebe als elektrische Antriebe auszuführen.

Weiterhin ist es weiterbildungsgemäß vorgesehen, dass die Drehachsen der beiden Drehgelenke in Fahrzeugquerrichtung ausgerichtet sind. Dies ermöglicht die Tischplattenanordnung in einer waagerechten Lage in Fahrzeughochrichtung oder Fahrzeuglängsrichtung zu Verschwenken.

Schließlich ist nach einer weiteren vorteilhaften Ausführungsform der Erfindung die Tischanordnung derart ausgebildet, dass die Tischplattenanordnung in Fahrzeugquerrichtung des Fahrzeugs relativ zur Tragarmvorrichtung verschiebbar ist. Dadurch wird es dem Fahrer bspw. im selbstfahrenden Betrieb des Fahrzeugs bei nach hinten verschobenen Fahrersitz ermöglicht, die Tischplattenanordnung auf die Fahrerseite zu verschieben, um sie dadurch bequem nutzen zu können.

Die erfindungsgemäße Tischanordnung ist geeignet für den Einsatz für alle Fahrzeugtypen und deren Modellen, insbesondere auch in Großraumlimousinen, bei welchen bspw. ein Beifahrersitz in rückwärtige Richtung gedreht werden kann, um die Tischanordnung durch einen Beifahrer und Fondpassagiere nutzen zu lassen.

Weitere Vorteile, Merkmale und Einzelheiten der Erfindung ergeben sich aus den Ansprüchen, der nachfolgenden Beschreibung bevorzugter Ausführungsformen sowie anhand der Zeichnungen. Dabei zeigen:
- Figur 1: eine schematische Seitenansicht einer im Bereich eines Vordersitzes eines Fahrzeugs installierten erfindungsgemäßen Tischanordnung in einer Grundposition,
- Figur 2: eine perspektivische Darstellung des frontseitigen Innenraums des Fahrzeugs mit einer Tischanordnung gemäß Figur 1,
- Figur 3: eine schematische Seitenansicht der Tischanordnung nach Figur 1 in einer aus der Grundposition verschwenkten Gebrauchsposition,
- Figur 4: eine perspektivische Darstellung des Innenraums des Fahrzeugs mit einer Tischanordnung gemäß Figur 3, und
- Figur 5: eine perspektivische Darstellung des Innenraums des Fahrzeugs mit einer Tischanordnung gemäß Figur 1 in einer als Fernseh- oder Kinobildschirm genutzten Position.

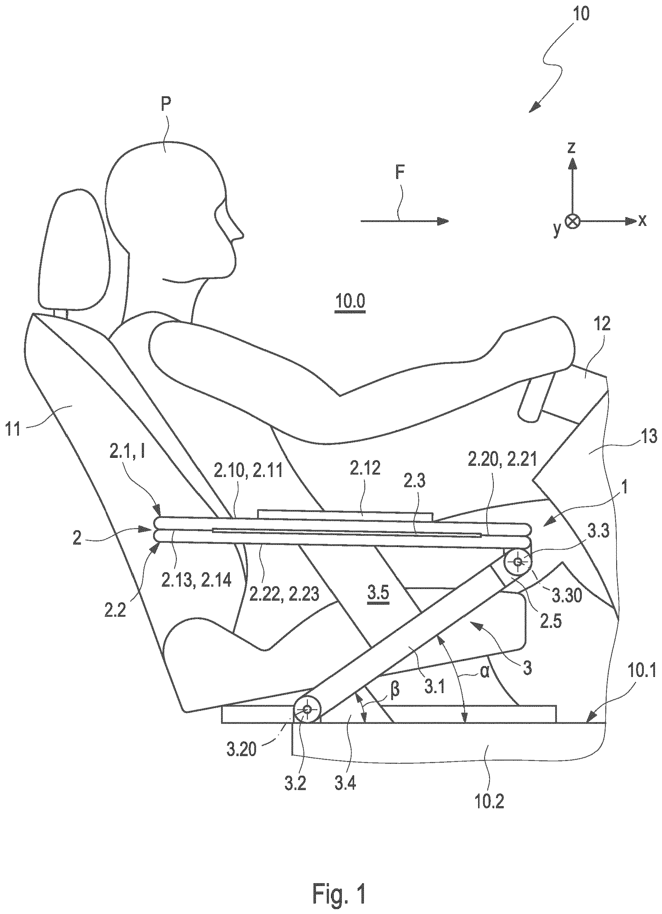

Die Figuren 1 bis 5 zeigen eine in einem Fahrzeuginnenraum 10.0 eines Fahrzeugs 10 fahrzeugfest installierte Tischanordnung 1, welcher als multifunktionaler Tisch in verschiedenen Gebrauchspositionen dargestellt ist.

Diese Tischanordnung 1 umfasst eine Tischplattenanordnung 2 mit zwei aufeinanderliegenden, identisch konturierten Tischplatten, nämlich einer ersten Tischplatte 2.1 und einer zweiten Tischplatte 2.2, sowie eine Tragarmvorrichtung 3, mit welcher die Tischplattenanordnung 2 mit einem Karosserieboden 10.2 einer Fahrzeugkarosserie 10.1 des Fahrzeugs 10 verschwenkbar verbunden ist.

Die Tragarmvorrichtung 3 besteht aus einem Tragarm 3.1, welcher am unteren Ende bezogen auf die Fahrzeughochrichtung (z-Richtung) mittels eines ersten Drehgelenkes 3.2 mit dem Karosserieboden 10.2 der Fahrzeugkarosserie 10.1 verschwenkbar verbunden ist, wobei die Drehachse 3.20 dieses ersten Drehgelenkes 3.2 in Fahrzeugquerrichtung (y-Richtung) verläuft.

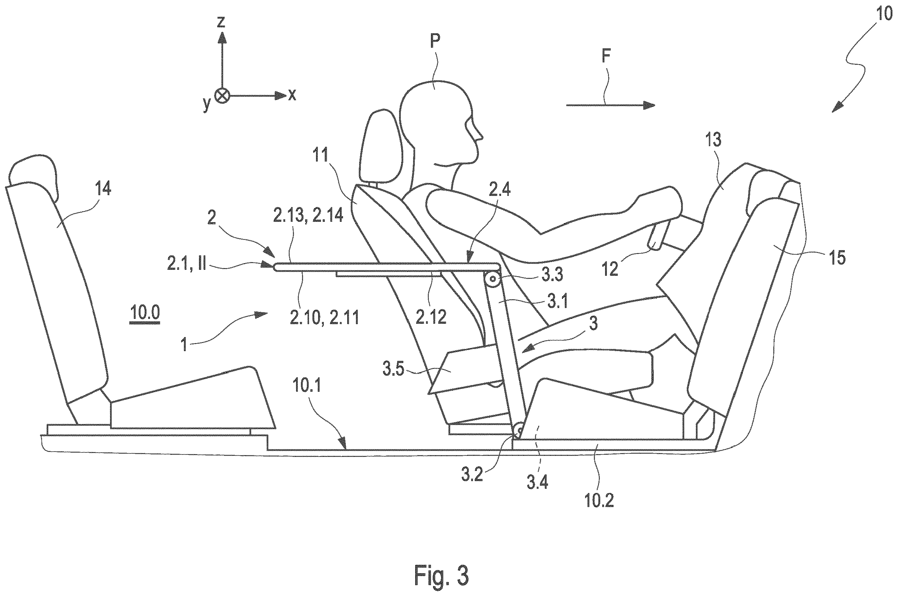

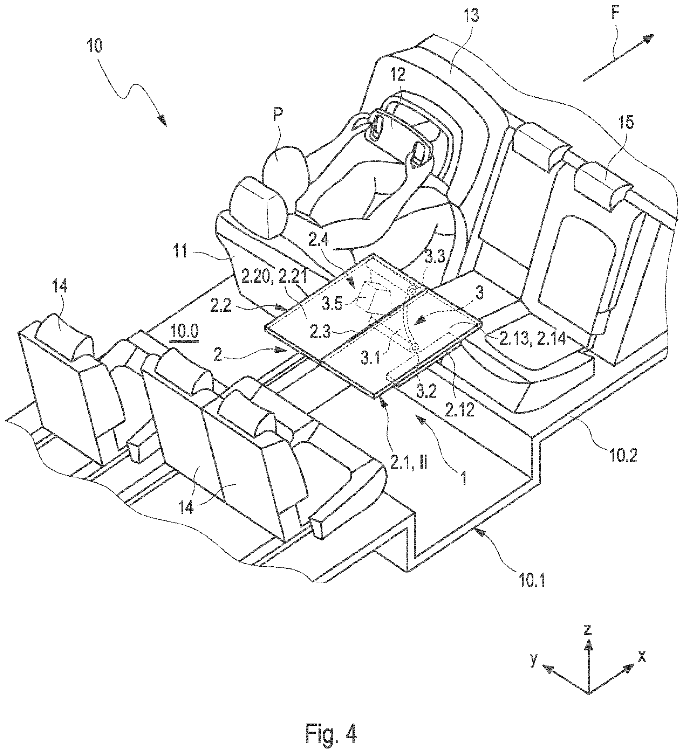

Am in Fahrzeughochrichtung (z-Richtung) gesehen oberen Ende des Tragarms 3.1 verbindet ein zweites Drehgelenk 3.3 mit einer ebenso in Fahrzeugquerrichtung (y-Richtung) verlaufende Drehachse 3.30 den Tragarm 3.1 mit der Tischplattenanordnung 2, nämlich mit der zweiten Tischplatte 2.2, auf welcher kongruent die erste Tischplatte 2.1 in einer ersten Position I angeordnet ist. Die oben liegende Tischplatte, also die erste Tischplatte 2.1 ist über ein Scharnier 2.3 mit der zweiten Tischplatte 2.2 verbunden, so dass die erste Tischplatte 2.1 mittels des Scharniers 2.3 aus der Position I um 180° in eine Position II in der Ebene der zweiten Tischplatte 2.2 verschwenkbar ist, um zusammen mit der zweiten Tischplatte 2.2 eine gemeinsame ebene Tischfläche zu bilden, wie dies in den Figuren 3 und 4 dargestellt ist.

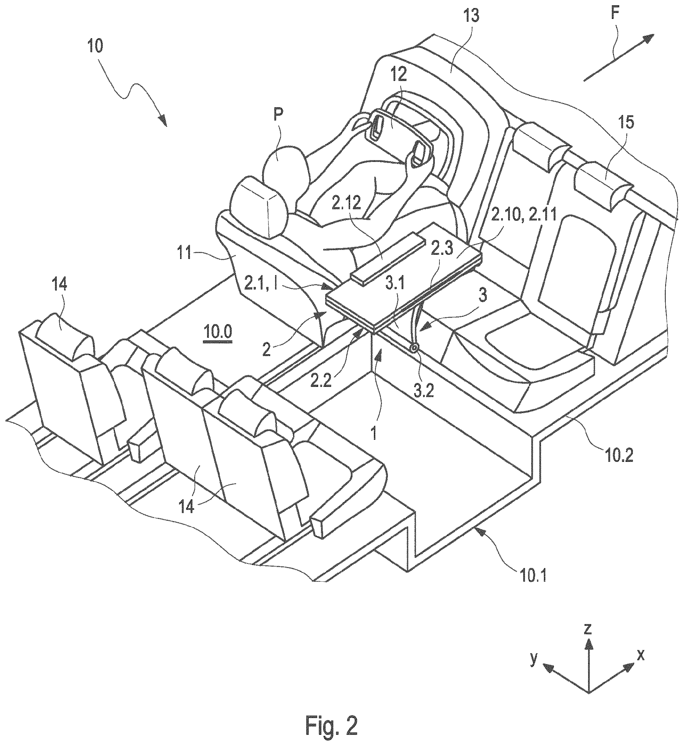

Mit diesen beiden Drehgelenken 3.2 und 3.3 können einerseits der Tragarm 3.1 gegenüber dem Karosserieboden 10.2 und andererseits die Tischplattenanordnung 2 relativ zum Tragarm 3.1 verschwenkt werden. Um eine stabile Grundposition der Tischanordnung 1 gemäß den Figuren 1 und 2 zu realisieren, ist ein erster Anschlag 3.4 und ein zweiter Anschlag 3.5 vorgesehen.

Der erste Anschlag 3.4 weist eine keilförmige Kontur auf und ist in Fahrtrichtung F des Fahrzeugs 10 gesehen vor dem ersten Drehgelenk 3.2 am unteren Ende des Tragarms 3.1 zwischen dem Karosserieboden 10.2 und dem Tragarm 3.1 derart angeordnet, dass der Tragarm 3.1 in einer in Fahrzeugrichtung F geneigten Stellung abgestützt wird. Der Neigungswinkel α des Tragarms 3.1 wird durch den Keilwinkel β des ersten Anschlags 3.4 bestimmt.

Der zweite Anschlag 3.5 ist flanschartig ausgebildet und ist von dem Tragarm 3.1 senkrecht abstehend an dessen mittleren Bereich angeformt. Das freie Ende dieses zweiten Anschlags 3.5 liegt auf der Unterseite 2.22 der zweiten Tischplatte 2.2 an, wodurch die Tischplattenanordnung 2 abgestützt und in ihrer Lage stabilisiert wird. Die Länge dieses zweiten Anschlags 3.5 ist so gewählt, dass bei dem Neigungswinkel α des Tragarms 3.1 die Tischplattenanordnung 2 in einer waagerechten Lage, also parallel zum Karosserieboden 10.2 verlaufend abgestützt wird.

Der Montagepunkt des ersten Drehgelenkes 3.2 befindet sich am Karosserieboden 10.2 bezogen auf die Fahrzeuglängsrichtung (x-Richtung) benachbart zu einem Fahrersitz 11 im Bereich einer Mittelkonsole des Fahrzeugs 10, so dass ein Fahrer P seinen rechten Arm bequem auf einer auf der Oberseite 2.10 der ersten Tischplatte 2.1 angeordneten Armauflage 2.12 ablegen kann, wobei sich die erste Tischplatte 2.1 in ihrer ersten Position I, also auf der zweiten Tischplatte 2.2 liegend befindet.

Insbesondere aus Figur 2 ist die geometrische Form der Kontur der beiden Tischplatten 2.1 und 2.2 ersichtlich, die jeweils eine identische rechteckförmige Form aufweisen, wobei die Längsseiten in Fahrzeuglängsrichtung (x-Richtung) verlaufen.

Die Armauflage 2.12 weist eine rechteckförmige Kontur auf, wobei die Längsseiten in Fahrzeuglängsrichtung (x-Rechnung) verlaufen und kürzer als die Länge der Längsseiten der ersten Tischplatte 2.1 sind, wobei auch die Breite der Armauflage 2.12 in Fahrzeugquerrichtung klein ist im Vergleich zur Breite der ersten Tischplatte 2.1. Die Armauflage 2.12 ist bezogen auf die zum Fahrersitz 11 benachbarte Längsseite der ersten Tischplatte mittig auf derselben angeordnet, so dass die zum Fahrersitz benachbarte Längsseite der Armauflage 2.12 bündig mit der zum Fahrersitz benachbarten Längsseite der ersten Tischplatte abschließt. Die Armauflage 2.12 kann mit einer gepolsterten Oberflächenschicht ausgeführt werden, um ein bequemes Ablegen des Fahrerarms zu ermöglichen.

An den zum Fahrersitz 11 gegenüberliegenden in Fahrzeuglängsrichtung (x-Richtung) verlaufenden Längskanten der beiden Tischplatten 2.1 und 2.2 ist das Scharnier 2.3 angeordnet, so dass die erste Tischplatte 2.1 aus der Position I gemäß Figur 2 entgegen der Richtung zum Fahrersitz 11 in die Position II gemäß Figur 3 oder Figur 4 aufklappbar ist. Dadurch entsteht eine von den beiden Tischplatten 2.1 und 2.2 gebildete Tischfläche 2.4, bei welcher die Armauflage 2.12 auf der Unterseite dieser Tischfläche 2.4 zu liegen kommt, wie dies insbesondere aus Figur 3 ersichtlich ist.

Die Oberseite 2.10 der ersten Tischplatte 2.1 ist mit einem Display 2.11 ausgebildet, wobei die gesamte Oberseite 2.10 außerhalb der Armauflage 2.12 als Display 2.11 ausgeführt sein kann oder nur ein Teilbereich der Oberseite 2.10. Dieses Display 2.11 kann zumindest bereichsweise mit einem Touchscreen ausgeführt werden, um Fahrzeug- und/oder Infotainment-Funktionalitäten durch den Fahrer oder ein Beifahrer bedienen zu können.

Des Weiteren ist auch die Unterseite 2.13 ersten Tischplatte 2.1 ebenso mit einem Display 2.14 und auch die Oberseite 2.20 der zweiten Tischplatte 2.2 ebenso mit einem Display 2.21 ausgebildet. Damit entsteht im aufgeklappten Zustand der ersten Tischplatte 2.1 eine Tischfläche gemäß Figur 4 zur Verfügung, deren gesamte Oberfläche als Display nutzbar ist, entweder als PC- oder Tablet-Bildschirm, zum Spielen von PC-Spielen, wie bspw. Brettspielen oder für in verschiedenen Fenstern frei positionierbare, verschiebbare oder drehbare Besprechungsunterlagen.

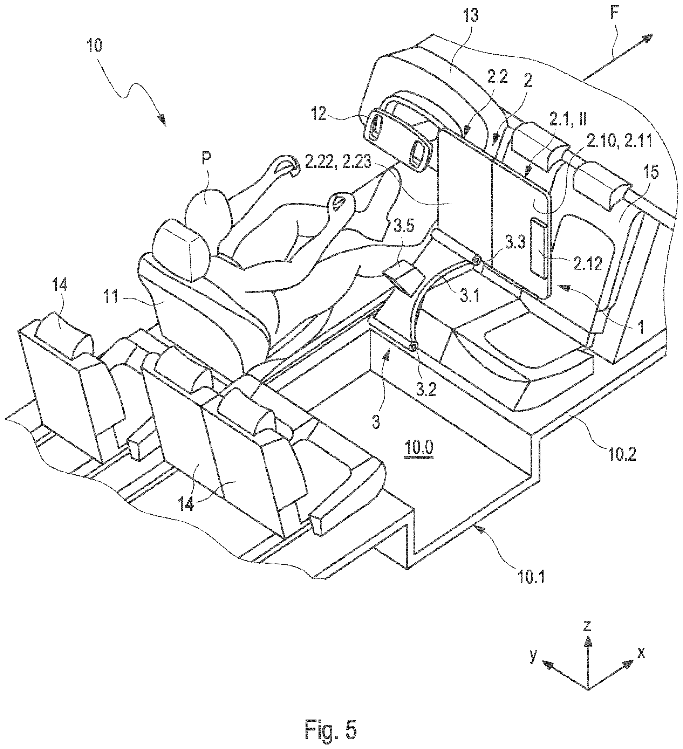

Ist schließlich auch die Unterseite der zweiten Tischplatte 2.2 mit einem Display 2.23 ausgeführt, lässt sich im aufgeklappten Zustand der Tischplattenanordnung 2 die dadurch aus der Oberseite 2.10 der ersten Tischplatte 2.1 und der Unterseite der zweiten Tischplatte 2.2 entstehende Oberfläche kann als Fernseh- oder Kinobildschirm für Fondpassagiere des Fahrzeugs 10, wenn die Tischplattenanordnung 2 mit der aufgeklappten ersten Tischplatte 2.1 in eine etwa senkrechte Position verschwenkt wird, wie dies in Figur 5 dargestellt ist.

Aus der Grundposition gemäß den Figuren 1 und 2 kann die Tischanordnung 1 in unterschiedliche Gebrauchsposition verschwenkt werden, wie dies bspw. in den Figuren 3 und 4 mit aufgeklappter erster Tischplatte 2.1 dargestellt ist. Aus der Grundposition gemäß Figur 1 kann der Tragarm 3.1 nur entgegen der Fahrtrichtung F verschwenkt werden und die Tischplattenanordnung 2 nur in die zum zweiten Anschlag 3.4 entgegengesetzte Richtung. Somit kann die Tischplattenanordnung 2 zusammen mit dem Tragarm 3.1 aus der Grundposition gemäß Figur 1 entgegen der Fahrtrichtung F des Fahrzeugs unter Beibehaltung der waagerechten Lage der Tischplattenanordnung 2 verschwenkt werden, wobei sich die Höhe der Tischplattenanordnung 2 gegenüber dem Karosserieboden 10.2 mit dem Verschwenken des Tragarms 3.1 geringfügig ändert. Hierbei verlagert sich die Tischplattenanordnung 2 in Richtung von Fondsitzen 14, also entgegen der Fahrtrichtung F des Fahrzeugs 10.

Um in solchen Gebrauchsposition in der Tischanordnung 1 eine stabile Lage zu sichern, sind die beiden Drehgelenke 3.2 und 3.3 als Rastgelenke ausgeführt.

Alternativ können die beiden Drehgelenke 3.2 und 3.3 mittels eines selbsthemmenden motorischen Schwenkantriebs verstellt werden, wobei diese Schwenkantriebe mit einem elektrischen Antrieb und einem selbsthemmenden bzw. selbst sperrenden Getriebe ausgeführt sind. Mittels einer geeigneten Steuereinheit können mehrere definierte Positionen einschließlich der Grundposition der Tischanordnung 1 programmiert werden, so dass mittels eines geeigneten Bedienelementes diese verschiedenen Positionen ausgewählt und eingestellt werden können. Die Programmierung dieser unterschiedlichen Positionen erfolgt derart, dass an diesen Positionen die Tischplattenanordnung 2 immer waagerecht zum Karosserieboden 10.2 ausgerichtet wird.

Ferner ist es auch möglich, dass die mittels des Scharniers 2.3 realisierte Scharnierfunktion ebenso mittels eines elektrischen Antriebs automatisiert wird.

Der Innenraum 10.0 des Fahrzeugs 10 weist neben dem Fahrersitz 11 zwei Beifahrersitze 15 auf, welche entgegen der Fahrtrichtung F ausgerichtet sind, so dass Passagiere auf den Beifahrersitzen 15 und den Fondsitzen 14 sich einander gegenübersitzen.

In der Grundposition der Tischanordnung 1 gemäß Figur 2 können somit neben dem Fahrer P auch die Passagiere der Beifahrersitzes 15 die Tischplattenanordnung 2 sowohl in deren nicht aufgeklappten Zustand als auch in deren aufgeklappten Zustand nutzen.

Die aus der Grundposition gemäß Figur 1 in eine Gebrauchsposition gemäß den Figuren 3 und 4 verschwenkte Tischanordnung 1 kann gemeinsam sowohl von den Fondpassagieren als auch den Passagieren der Beifahrersitzes 15 genutzt werden, insbesondere wenn die Tischplattenanordnung 2 aufgeklappt ist, wie dies aus Figur 4 ersichtlich ist.

In der Gebrauchsposition der Figur 4 kann die Oberfläche der aufgeklappten Tischplattenanordnung 2 als Display sowohl von den Passagieren auf den Beifahrersitzen 15 als auch der Fondpassagiere auf den Fondsitzen 14 genutzt werden. Dieses Display setzt sich aus der dem Display 2.14 der Unterseite 2.13 der ersten Tischplatte 2.1 und dem Display 2.21 auf der Oberseite 2.20 der zweiten Tischplatte 2.2 zusammen.

Wird diese aufgeklappte Tischplattenanordnung 2 nach Figur 4 aus der Grundposition nach Figur 1 in eine senkrechte Richtung entsprechend von Figur 5 verschwenkt, wird die Rückseite der aufgeklappten Tischplattenanordnung 2 von den Fondpassagieren auf den Fondsitzen 14 als Fernseh- und/oder Kinobildschirm verwendet, wie dies bereits weiter oben erläutert ist. Ferner ist eine Nutzung als Avatar für den Fahrer, bspw. als Bildschirmtelefonie möglich. Bei dieser Nutzung kann natürlich die Beifahrersitze nicht besetzt werden.

Bei einer Positionierung der Tischanordnung 1 mit senkrecht aufgestellter Tischplattenanordnung 2 zur Nutzung als Bildschirm können Beifahrern auf den Beifahrersitzen 15 und Fondpassagieren auf den Fondsitzen 14 unterschiedliche Inhalte angezeigt werden, bspw. auch als Touchscreens interaktiv nutzen.

Wenn in einem selbstfahrenden Fahrzeug 10 der Fahrer von seinen Fahraufgaben entbunden ist, kann dieser in solchen Situationen seinen Fahrersitz 11 entgegen der Fahrtrichtung F entsprechend der Darstellung nach Figur 5 verstellen, um somit bei genügendem Abstand von einem Lenkrad 12 und einem Armaturenbrett 13 des Fahrzeugs 10 das Display auf der Rückseite der aufgeklappten Tischplattenanordnung 2 ebenso als Fernseh- und/oder Kinobildschirm nutzen. Eine solche Nutzung durch den Fahrer kann komfortabler gestaltet werden, wenn die Tischplattenanordnung 2 zusammen mit dem zweiten Drehgelenk 3.3 gegenüber dem Tragarm 3.1 in Richtung des Fahrers, also in Fahrzeugquerrichtung (y-Richtung) verschiebbar ist. Dies lässt sich mit einer Verschiebeschiene 2.5 realisieren, die lediglich in Figur 1 schematisch angedeutet ist.

### BEZUGSZEICHEN

- 1: Tischanordnung

- 2: Tischplattenanordnung der Tischanordnung 1
- 2.1: erste Tischplatte der Tischplattenanordnung 2
- 2.10: Oberseite der ersten Tischplatte 2.1
- 2.11: Display auf der Oberseite 2.10
- 2.12: Armauflage auf der Oberseite 2.10
- 2.13: Unterseite der ersten Tischplatte 2.1
- 2.14: Display auf der Unterseite 2.13
- 2.2: zweite Tischplatte der Tischplattenanordnung 2
- 2.20: Oberseite der zweiten Tischplatte 2.2
- 2.21: Display auf der Oberseite 2.20
- 2.22: Unterseite der zweiten Tischplatte 2.2
- 2.23: Display auf der Unterseite 2.22
- 2.3: Scharnier der Tischplattenanordnung 2
- 2.4: Tischfläche
- 2.5: Verschiebeschiene

- 3: Tragarmvorrichtung
- 3.1: Tragarm der Tragarmvorrichtung 3
- 3.2: erstes Drehgelenk der Tragarmvorrichtung 3
- 3.20: Drehachse des ersten Drehgelenkes 3.2
- 3.3: zweites Drehgelenk der Tragarmvorrichtung 3
- 3.30: Drehachse des zweiten Drehgelenkes 3.3
- 3.4: erster Anschlag der Tragarmvorrichtung 3
- 3.5: zweiter Anschlag der Tragarmvorrichtung 3

- 10: Fahrzeug
- 10.0: Innenraum des Fahrzeugs 10
- 10.1: Karosserie des Fahrzeugs 10
- 10.2: Karosserieboden der Karosserie 10.1
- 11: Fahrersitz des Fahrzeugs 10
- 12: Lenkrad des Fahrzeugs 10
- 13: Armaturenbrett des Fahrzeugs 10
- 14: Fondsitze des Fahrzeugs 10
- 15: Beifahrersitze

- I: erste Position der ersten Tischplatte 2.1
- II: zweite Position der ersten Tischplatte 2.1

- F: Fahrtrichtung des Fahrzeugs 10
- P: Fahrer des Fahrzeugs 10

## Patentansprüche

1. Tischanordnung (1) für den Innenraum (10.0) eines Fahrzeugs (10) mit
- einer Tischplattenanordnung (2) mit einer ersten Tischplatte (2.1) und einer zur ersten Tischplatte (2.1) kongruenten zweiten Tischplatte (2.2), wobei die erste und zweite Tischplatte (2.1, 2.2) derart schwenkbar verbunden sind, dass die erste Tischplatte (2.1) zwischen einer ersten Position (I), in welcher dieselbe kongruent auf der zweiten Tischplatte (2.2) liegend angeordnet ist, und einer zweiten Position (II), in welcher die erste Tischplatte (2.1) gemeinsam mit der zweiten Tischplatte (2.2) eine ebene Tischfläche bilden, schwenkbar ist,
- einem jeweils auf der Oberseite (2.10) und der Unterseite (2.13) der ersten Tischplatte (2.1) ausgebildeten Display (2.11, 2.14)
- einer auf der Oberseite (2.10) der ersten Tischplatte (2.1) angeordneten Armauflage (2.12) für einen Fahrer (P) des Fahrzeugs (10),
- einem auf der Oberseite (2.20) der zweiten Tischplatte (2.2) ausgebildeten Display (2.21), und
- einer Tragarmvorrichtung (3), mit welcher die Tischplattenanordnung (2) mit einer Karosserie (10.1) des Fahrzeugs (10) verschwenkbar verbunden ist.

2. Tischanordnung (1) nach Anspruch 1, bei welcher die erste und zweite Tischplatte (2.1, 2.2) randseitig mit einem Scharnier (2.3) schwenkbar verbunden sind.

3. Tischanordnung nach Anspruch 1 oder 2, bei welcher die zweite Tischplatte auf der Unterseite (2.22) mit einem Display (2.23) ausgebildet ist.

4. Tischanordnung (1) nach einem der vorhergehenden Ansprüche, bei welcher
- die Tragarmvorrichtung (2) einen Tragarm (2.1) umfasst, welcher mit einem Ende mittels eines ersten Drehgelenkes (3.2) schwenkbar mit der Karosserie (10.1) des Fahrzeugs (10) verbunden ist, und
- die Tischplattenanordnung (2) mit einem anderen Ende des Tragarms (3.1) mittels eines zweiten Drehgelenkes (3.3) schwenkbar verbunden ist.

5. Tischanordnung (1) nach Anspruch 4, bei welcher mittels des zweiten Drehgelenks (3.3) die zweite Tischplatte (2.2) schwenkbar mit dem Tragarm (3.1) verbunden ist.

6. Tischanordnung (1) nach Anspruch 4 oder 5, bei welcher
- ein erster keilförmiger Anschlag (3.4) am mit der Karosserie (10.1) verbundenen Ende des Tragarms (3.1) vorgesehen ist, welcher ausgebildet ist den Tragarm (3.1) in einer gegenüber dem Karosserieboden (10.2) geneigten Richtung abzustützen, und
- ein zweiter Anschlag (3.5) an dem Tragarm (3.1) angeordnet ist, welcher ausgebildet ist die Tischplattenanordnung (2) in einer waagerechten Lage abzustützen.

7. Tischanordnung (1) nach einem der Ansprüche 4 bis 6, bei welcher das erste Drehgelenk (3.2) und/oder das zweite Drehgelenk (3.3) als Rastgelenk ausgebildet sind/ist.

8. Tischanordnung (1) nach einem der Ansprüche 4 bis 6, bei welcher das erste Drehgelenk (3.2) und/oder das zweite Drehgelenk (3.3) mittels eines selbsthemmenden motorischen Schwenkantriebs verstellbar ist.

9. Tischanordnung (1) nach einem der Ansprüche 4 bis 8, bei welcher die Drehachsen der Drehgelenke (3.2, 3.3) in Fahrzeugquerrichtung (y-Richtung) des Fahrzeugs (10) ausgerichtet sind.

10. Tischanordnung (1) nach einem der vorhergehenden Ansprüche, bei welcher die Tischplattenanordnung (2) in Fahrzeugquerrichtung (y-Richtung) des Fahrzeugs (10) relativ zur Tragarmvorrichtung (3) verschiebbar ist.

11. Fahrzeug (10) mit einer Tischanordnung (1) nach einem der vorhergehenden Ansprüche.

## Claims

1. Table arrangement (1) for the interior (10.0) of a vehicle (10) comprising
- a table top arrangement (2) comprising a first table top (2.1) and a second table top (2.2) congruent with the first table top (2.1), the first and second table tops (2.1, 2.2) being connected pivotably in such a way that the first table top (2.1) is pivotable between a first position (I), in which it lies congruently on the second table top (2.2), and a second position (II), in which the first table top (2.1) together with the second table top (2.2) form a flat table surface,
- a display (2.11, 2.14) formed respectively on the upper side (2.10) and the lower side (2.13) of the first table top (2.1)
- an armrest (2.12) for a driver (P) of the vehicle (10) arranged on the upper side (2.10) of the first table top (2.1),
- a display (2.21) formed on the upper side (2.20) of the second table top (2.2), and
- a support arm device (3) with which the table top arrangement (2) is pivotably connected to a bodywork (10.1) of the vehicle (10).

2. Table arrangement (1) according to claim 1, in which the first and second table tops (2.1, 2.2) are pivotably connected at the edges by a hinge (2.3).

3. Table arrangement according to claim 1 or 2, in which the second table top is formed with a display (2.23) on the underside (2.22).

4. Table arrangement (1) according to any one of the preceding claims, in which
- the support arm device (2) includes a support arm (2.1) which is pivotally connected at one end to the bodywork (10.1) of the vehicle (10) by means of a first pivot joint (3.2), and
- the table top arrangement (2) is pivotally connected to another end of the support arm (3.1) by means of a second pivot joint (3.3).

5. Table arrangement (1) according to claim 4, in which the second table top (2.2) is pivotably connected to the support arm (3.1) by means of the second pivot joint (3.3).

6. Table arrangement (1) according to claim 4 or 5, in which
- a first wedge-shaped stop (3.4) is provided at the end of the support arm (3.1) connected to the bodywork (10.1), which is configured to support the support arm (3.1) in a direction that is inclined relative to the bodywork floor (10.2), and
- a second stop (3.5) is arranged on the support arm (3.1), which is configured to support the table top arrangement (2) in a horizontal position.

7. Table arrangement (1) according to any one of claims 4 to 6, in which the first swivel joint (3.2) and/or the second swivel joint (3.3) are/is configured as a latching joint.

8. Table arrangement (1) according to any one of claims 4 to 6, in which the first pivot joint (3.2) and/or the second pivot joint (3.3) is adjustable by means of a self-locking motorised pivot drive.

9. Table arrangement (1) according to any one of claims 4 to 8, in which the axes of rotation of the swivel joints (3.2, 3.3) are oriented in the transverse direction (y-direction) of the vehicle (10).

10. Table arrangement (1) according to any one of the preceding claims, in which the table top arrangement (2) is displaceable in the transverse vehicle direction (y-direction) of the vehicle (10) relative to the support arm device (3).

11. Vehicle (10) comprising a table arrangement (1) according to any of the preceding claims.

## Revendications

1. Agencement de table (1) pour l'habitacle (10.0) d'un véhicule (10) avec
- un agencement de plaque de table (2) avec une première plaque de table (2.1) et une seconde plaque de table (2.2) congruente à la première plaque de table (2.1), dans lequel les première et seconde plaques de table (2.1, 2.2) sont reliées de manière pivotante de telle manière que la première plaque de table (2.1) soit pivotante entre une première position (I), dans laquelle celle-ci est agencée de manière congruente se trouvant sur la seconde plaque de table (2.2), et une seconde position (II), dans laquelle la première plaque de table (2.1) forment conjointement avec la seconde plaque de table (2.2) une surface de table plane,
- un affichage (2.11, 2.14) réalisé respectivement sur le côté supérieur (2.10) et le côté inférieur (2.13) de la première plaque de table (2.1)
- un accoudoir (2.12) agencé sur le côté supérieur (2.10) de la première plaque de table (2.1) pour un conducteur (P) du véhicule (10),
- un affichage (2.21) réalisé sur le côté supérieur (2.20) de la seconde plaque de table (2.2), et
- un dispositif de bras de support (3), avec lequel l'agencement de plaque de table (2) est relié de manière pivotante à une carrosserie (10.1) du véhicule (10).

2. Agencement de table (1) selon la revendication 1, pour lequel les première et seconde plaques de table (2.1, 2.2) sont reliées de manière pivotante côté bord à une charnière (2.3).

3. Agencement de table selon la revendication 1 ou 2, pour lequel la seconde plaque de table est réalisée sur le côté inférieur (2.22) avec un affichage (2.23).

4. Agencement de table (1) selon l'une quelconque des revendications précédentes, pour lequel
- le dispositif de bras de support (2) comporte un bras de support (2.1) qui est relié à une extrémité au moyen d'une première articulation rotative (3.2) de manière pivotante à la carrosserie (10.1) du véhicule (10), et
- l'agencement de plaque de table (2) est relié de manière pivotante à une autre extrémité du bras de support (3.1) au moyen d'une seconde articulation rotative (3.3).

5. Agencement de table (1) selon la revendication 4, pour lequel la seconde plaque de table (2.2) est reliée de manière pivotante au bras de support (3.1) au moyen de la seconde articulation rotative (3.3).

6. Agencement de table (1) selon la revendication 4 ou 5, pour lequel
- une première butée (3.4) en forme de coin est prévue au niveau de l'extrémité reliée à la carrosserie (10.1) du bras de support (3.1) qui est réalisée afin d'appuyer le bras de support (3.1) dans une direction inclinée par rapport au fond de carrosserie (10.2), et
- une seconde butée (3.5) est agencée au niveau du bras de support (3.1) qui est réalisée afin d'appuyer l'agencement de plaque de table (2) dans une position horizontale.

7. Agencement de table (1) selon l'une quelconque des revendications 4 à 6, pour lequel la première articulation rotative (3.2) et/ou la seconde articulation rotative (3.3) est/sont réalisée(s) comme articulation d'encliquetage.

8. Agencement de table (1) selon l'une quelconque des revendications 4 à 6, pour lequel la première articulation rotative (3.2) et/ou la seconde articulation rotative (3.3) est réglable au moyen d'un entraînement pivotant motorisé autobloquant.

9. Agencement de table (1) selon l'une quelconque des revendications 4 à 8, pour lequel les axes de rotation des articulations rotatives (3.2, 3.3) sont orientés dans le sens transversal de véhicule (direction y) du véhicule (10).

10. Agencement de table (1) selon l'une quelconque des revendications précédentes, pour lequel l'agencement de plaque de table (2) est mobile dans le sens transversal de véhicule (direction y) du véhicule (10) par rapport au dispositif de bras de support (3).

11. Véhicule (10) avec un agencement de table (1) selon l'une quelconque des revendications précédentes.
